# EUROPEAN PATENT SPECIFICATION

(11) **EP 3 057 415 B1**
(45) Date of publication and mention of the grant of the patent: **06.05.2020**
(21) Application number: 14795544.7
(22) Date of filing: 10.10.2014
(51) Int. Cl.: A01K 73/045

(54) **TRAWL DOOR**
SCHERBRETT
PORTE DE CHALUT

(30) Priority: 14.10.2013 DK 201370581; 23.06.2014 DK 201470378
(43) Date of publication of application: 24.08.2016
(73) Proprietor: Thyborøn Skibssmedie A/S, 7680 Thyborøn (DK)
(72) Inventor: ANDREASEN, Peder Stausholm, DK-7680 Thyborøn (DK)
(74) Representative: Olesen, Birthe Bjerregaard
(86) International application number: PCT/DK2014/050324
(87) International publication number: WO 2015/055207

(56) References cited:
- WO-A1-2010/019049
- WO-A1-2013/014507
- GB-A- 154 453
- JP-A- S53 122 576
- US-A- 4 894 946

## Description

### Background of the Invention

The present invention concerns a trawl door of the kind commonly known under the name cambered V-door, and with a total height greater than its total length. Such a trawl door is usually composed of two, almost identical parts consisting of cambered plates or airfoils with a curvature in longitudinal direction of the trawl door. The parts are disposed at an angle to each other symmetrically along a centre plane extending in longitudinal direction. Such trawl doors are used in pairs in pelagic or semi-pelagic fishery for spreading the mouth of a trawl net.

It is noted that the invention also includes the kind of trawl doors which in addition to an upper and lower part include an intermediate part connecting the upper and lower part with each other, wherein the intermediate part has the same profile as the upper and lower parts but constitute a straight intermediate piece in the height direction of the trawl door.

A number of parameters determine the mode of operation and capability of a trawl door under towing in water.

The spreading force, which is the lateral force exerted by a trawl door for spreading the mouth of the trawl net, is greater the larger the area of the trawl door as seen from the side. There are examples of trawl doors where the area of the trawl door can be adjusted manually. GB 1 405 076 discloses a flat trawl door where the length is greater than the width, and where a displaceable plate element can be made to expose and cover, respectively, an opening at the centre of the trawl door. Another example is seen in SU 1 746 970 A1, disclosing a cambered, but not V-shaped trawl door where two openings in upper and lower half, respectively, of the door can be exposed or covered by a displaceable plate element. A similar feature is shown in WO 86/02525 in a trawl door which is V-shaped but not cambered, and where the length is greater than the width.

In WO2013/014507 is disclosed a further trawl door where the trawl door comprises a number of foils such that the spreading force is achieved by the water passing through the passages created between adjacent foils. By furthermore being able to adjust the angle of attack of the foils relative to the pulling action of the trawl door and also the length of the foils the spreading force may be controlled/adjusted such that the trawl door may be used for trawl fishing under various conditions.

In US4894946 is disclosed a further trawl door, according to the preamble of claim 1, where the main trawl door construction is provided with flanges such that an additional trawl door section may be arranged parallel to the main trawl door. The flanges and the extra trawl door section is provided with means such that the distance between to two parts may be adjusted in order to create an optimum water flow through the passage created between the trawl door and the extra section. In this manner the spreading force of the trawl door may be adjusted for the particular purpose.

The efficiency of a trawl door is highly dependent on its general dimensional ratio (aspect ratio), defined as the relationship between total height divided by total width, H:B, as the width here and in the following is identical to the length of the trawl door. The greater H:B, the better spreading force is attained in relation to the towing resistance experienced by the trawl door in the water. By pelagic trawl doors it is therefore aimed to maximise H:B, where the limit for this figure to some degree depends on practical conditions as very high trawl doors can be difficult to handle on-board.

The position in the water of trawl doors also determines how deep the trawl net is situated in the water body. In order to catch schools of fish at different depths in the water body, it is thus necessary for the trawl doors to assume different depths in the water. This adjustment of the course of the trawl doors in water can be provided by fastening the towing wires and chains for trawler and trawl net, respectively, in various ways on the trawl doors.

WO 2010/019049 A1 discloses a cambered trawl door with an H:B ratio greater than 1 and which is formed symmetrically about a centre plane, which is horizontal in situation of use, as an upper part and a lower part of the trawl door extend in opposite directions from the centre plane. The upper and lower parts are each provided with an opening close to the upper and lower edges of the trawl door, and at some distance from the leading edge and trailing edge of the trawl door. Respective plate elements are arranged at the openings such that the plate elements can cover or expose openings by vertical displacement towards and away from the centre plane, respectively. The upper and lower parts are connected by a longitudinal central tube section that contains a drive mechanism. The plate elements are individually displaced by screw spindles that are mechanically connected to the drive mechanism. By the individual displacement of the plate elements, the active hydrodynamic area of the upper and lower parts, respectively, be adjusted, causing the vertical position of the trawl door in water to be changed. Use of a central mechanical drive mechanism in a tube section as a connecting constructional part means that the design is somewhat heavier than other known trawl doors with the same main features, a fact influencing the capability of the trawl door in a disadvantageous way.

### Explanation of the Invention

An object of the trawl door according to the invention is to indicate a trawl door for pelagic fishing by which the spreading force can be adjusted without substantially increasing the specific resistance in water. Another object of the invention is to provide a trawl door with an H:B that can be changed with simple means which will not or only slightly influence the capability of the trawl door in a negative way. A further object of the invention is to provide more simple means for changing the draught, i.e. the vertical position in the water.

These and other objects are achieved by a trawl door according to the invention wherein at at least one of the upper and lower parts there is provided a movable plate element at the trailing edge of the fixed body plate or airfoil profile, and wherein, according to the characterising portion of independent claim 1, the movable plate element can be moved in longitudinal direction of the trawl door such that the plate element can be moved between two positions, a first position in which the plate element is substantially disposed along a non-perforated region of the fixed body plate or airfoil profile, and a second position in which the plate element is moved a length relative to the fixed body plate or airfoil profile such that the active hydrodynamic area of the trawl door is increased thereby.

In an embodiment of the invention, the plate element is arranged such that it can be displaced between the first position and the second position to a position where the plate element is located between the first and second positions.

By the invention it is possible to utilise the natural flow around the trawl door without disturbing it in any substantial way since turbulence is not produced by openings at the middle of the trawl door as by the prior art. By the invention it is possible to arrange the movable plate element such that it can adjust the width of the trawl door at the trailing edge of the trawl door so that the trawl door in the first position of the plate element has a greater H:B ratio than in the second position, but lesser spreading force. By applying the invention only in one part of a V-shaped trawl door, e.g. the upper part, a displacement of the plate element between the two positions will not only cause a change in spreading force but also a change in the angle of inclination of the trawl door in relation to vertical transversely of the towing direction, meaning that the trawl door will either rise up or sink down in the water. The draught of the trawl net in the water can thereby be adjusted without changing the fastening points on the trawl door for towing wires and chains to trawler and trawl net, respectively.

In a preferred embodiment, the movable plate element is seated in guides, and a drive means for displacing the plate element is arranged for displacing the plate element relative to the fixed body plate or the airfoil profile.

In its simplest embodiment, the drive means includes a screw spindle that can be operated manually. This is particularly advantageous if desired to adjust the hydrodynamic area of the trawl doors before launching the trawl doors in the water, i.e. in the cases where a certain spreading force during fishing is wanted in beforehand. The screw spindle can be mounted at a side of the body plate/airfoil profile; alternatively, it can be passed through the body plate with the end to be manually rotated such that a box wrench or similar can be applied this end for turning the spindle and displacing the plate element.

Alternatively, the drive means may include a screw spindle which is driven by an electric motor. Such an embodiment is relevant if the position of the plate element is to be adjusted during fishery as the electric motor then can be remotely controlled wirelessly or by wired signals.

A further alternative will be that the drive means includes a pneumatic cylinder. A pneumatic system will imply relatively few problems under water.

In an embodiment of the invention, there is arranged at least one opening or at least one perforated region in the body plate or the airfoil profile such that the plate element in its second position covers the opening or the perforated region. It is understood that the opening or the perforated region is located close to the trailing edge of the trawl door. By this construction can be applied a trawl door design with known form and properties, but where one or more openings are provided in the vicinity of the trailing edge of the body plate/airfoil profile. The total width of the trawl door is thus not changed by displacing the plate element. plate element is displaced rearwardly beyond the trailing edge of the body plate or the airfoil profile so that the plate element forms an extension of the body plate/airfoil profile. Hereby, the displacement causes a change of the total width of the trawl door.

The movable plate element can be disposed differently in relation to the adjacent body plate. Thus it will be possible to have the movable plate element disposed at the "inner side" of the trawl door, i.e. the side at which chains or wires for the trawl is fastened, but it will also be possible to dispose the plate element at the "outer side", i.e. the side of the trawl door where the wires for the trawl net is fastened.

Furthermore, it is possible that the movable plate element is arranged such that the plate element in the first position is at least partially in contact with the body plate. The plate element will thereby be displaced slidingly along the body plate.

In an alternative embodiment, the movable plate element is arranged such that the plate element in the first position is spaced apart from the body plate. This embodiment is particularly relevant if the plate element constitutes a separate "foil" or airfoil profile located at the trailing edge of the trawl door.

In an embodiment, the movable plate element is arranged such that the spacing between the plate element and the body plate in the second position of the plate element is constant or increasing in direction towards the rearmost free edge of the trawl door.

In a further embodiment of the trawl door according to the invention, the movable plate element is suspended pivotably about an axis extending substantially in the height direction of the trawl door in the situation of use such that the plate element can be pivoted between the two positions, a first position in which the plate element is substantially disposed along the fixed body plate or airfoil profile, and a second position in which the plate element is pivoted away relative to the fixed body plate or airfoil profile so that the plate element is disposed behind the fixed body plate or airfoil profile and forms at least part of the rearmost free edge of the trawl door during normal use, and such that the active hydrodynamic area of the trawl door is increased thereby.

The plate element can thus be suspended by hinging at the body plate or the airfoil profile, which is a cheap and simple constructional design. Adjustment of the hydrodynamic area of the trawl door is therefore performed by pivoting the plate element between the two positions and lock it in the said positions before launching the trawl door in the water. Compared with the prior art, a sliding seating arrangement is therefore not required for displacing the plate element between the passive first position and the active second position.

The hinge arrangement can be provided as a parallel displacement, though a simple pivoting about a single axis will be preferred.

In a further embodiment of the invention, a preferably hollow intermediate part is provided for receiving control and drive means of the plate element, the mutually angled upper and lower parts being interconnected by the intermediate part. The intermediate part can accommodate an energy storage, control electronics and/or remote control equipment, including radio communication equipment.

### The Drawing

Preferred embodiments of the invention will now be described with reference to the drawing, where:
- Fig. 1: shows a first embodiment of a trawl door according to the invention, as seen from the side, with a movable plate element in a first position;
- Fig. 2: shows the same as Fig. 1, but with the plate element in a second position;
- Fig. 3 is: a sectional view according to the line III-III in Fig. 1,
- Fig. 4 is: a sectional view according to the line IV-IV on Fig. 2;
- Figs. 5 and 6: show cross-sectional views corresponding to Figs. 2 and 4 through a second embodiment of a trawl door according to the invention, with a plate element in a second position and a first position, respectively;
- Fig. 7a-b: show a third embodiment of the trawl door according to the invention as seen from the inner side and in perspective view, respectively;
- Fig. 8: is a sectional view according to the line VIII-VIII on Fig. 7a;
- Fig. 9: is a detail of Fig. 8 showing possible pivoting of a rearmost plate element;
- Figs. 10a-b: show the same as Figs. 7a and 7b, respectively, but where the rearmost foil is pivoted to inactive position;
- Fig. 11 is: a sectional view according to the line XI-XI on Fig. 10a;
- Fig. 12: shows a detail of Fig. 11;
- Fig. 13a-c: show a fourth embodiment of the trawl door according to the invention as seen from the rear end, from the inner side and from the outer side, respectively; and
- Fig. 14: shows the same as Fig. 13b, but in perspective view.

### Description of Example Embodiments

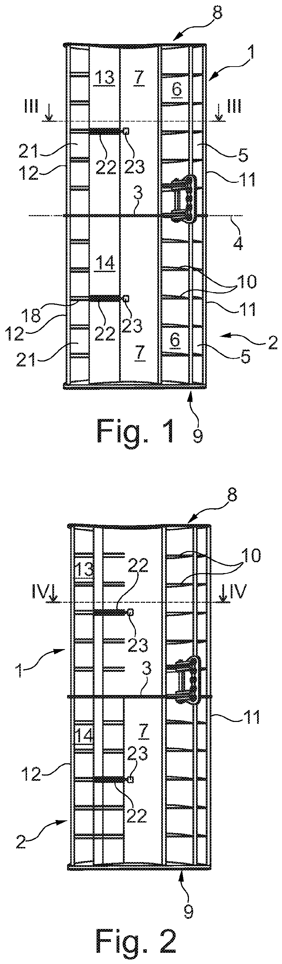

A preferred embodiment of the invention is shown on Figs. 1 - 4 in the form of a pelagic trawl door with a total height greater than the length. In this embodiment, the trawl door is designed with an upper part 1 and a lower part 2 which are joined by welding a through-going intermediate plate piece 3, which is approximately horizontal during use as the parts 1, 2 thereby form an angle in relation to each other (not shown). For all practical purposes, the parts 1 and 2 can be regarded as mirror images of each other about an axis 4 extending through the intermediate plate piece 3.

The trawl door is constructed in a known way of several cambered plates (foils) 5, 6, 7 extending from the intermediate plate piece 3 towards the upper end 8 and the lower end 9, respectively. The largest of these plate is here called the body plate 7. Ribs 10 are welded between the plates 5 - 7 for reinforcing the trawl door. The leading edge of the trawl door is designated 11 and its trailing edge 12, as seen in relation to the travel direction during fishing.

The particular feature of the invention is that the trawl door is provided with movable plate elements 13, 14 at the trailing edge 12 of the upper part 1 and the lower part 2, respectively. In the present description the plate elements 13, 14 may be regarded as identical in shape, though in practice there will be small differences.

It is possible within the scope of the invention that the trawl door only has one movable plate element 13, 14, for example only one plate element 13 in the upper part 1 of the trawl door. In the shown embodiment, the plate elements extend over the entire distance from the intermediate plate piece 3 to respective upper and lower ends 8, 9, but it is possible within the scope of the invention that the movable plate elements 13, 14 only extend a part of this distance, e.g. a length from the upper and lower ends 8, 9, respectively, terminating at a distance from the intermediate plate piece 3.

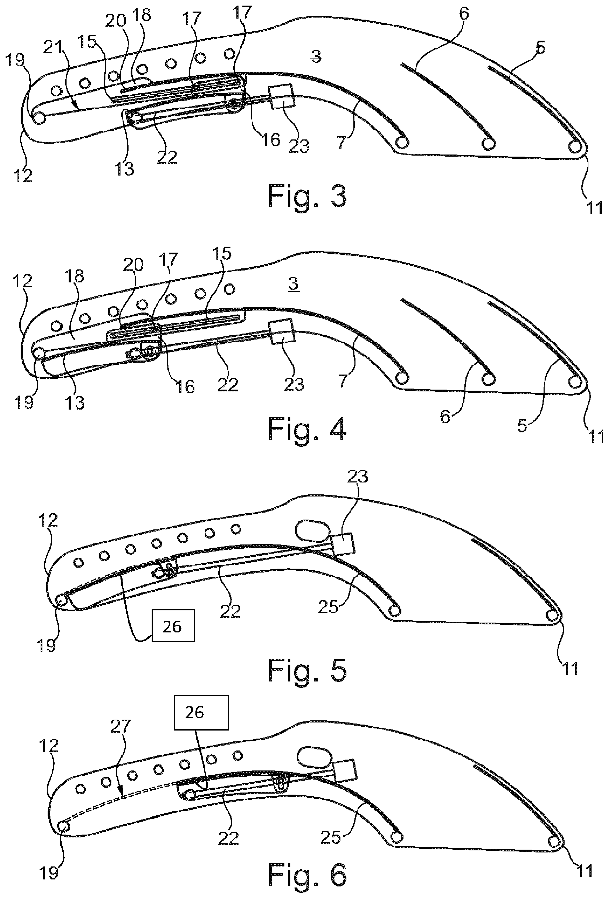

As shown in Figs. 3 and 4, the plate element 13 and similarly the element 14 can be arranged in guides 15 as a flange 16 on the plate element 13, 14 with pins 17 engage the guide 15 in a rib 18 or similar welded to the body plate 7. By a suspension with to pins 17 it is ensured that the plate element 13, 14 can be moved in parallel, independently of the curvature of the body plate 7.

Furthermore, it appears that the plate element 13, 14 is arranged spaced apart from the body plate 7 such that a passage for a flow of water between body plate 7 and plate element 13, 14 is formed. The disposition and curvature of the plate element 13, 14 provide that the passage at the inflow side is slightly smaller than at the outflow side in the first position shown on Fig. 3, in order to ensure minimal water resistance in this position.

In the first position shown on Figs. 1 and 3, the plate element 13, 14 is retracted at the side of the body plate 7. An opening 21 is hereby formed between the trailing edge of the trawl door by a round rod 19 and the trailing edge 20 of the body plate 7.

In the second position shown on Figs. 2 and 4, the plate element 13, 14 is displaced towards the trailing edge 12. The active hydrodynamic area of the trawl door is increased thereby. Particularly by this first embodiment, it appears that when the hydrodynamic area of the trawl door is reduced, the towing resistance is reduced relatively more by percentage than the spreading force.

As drive mechanism in the shown embodiment is used a screw spindle 22 which is rotatably seated on a rib on the body plate 7, and where a not shown spindle nut constitutes the connection to the plate element 13, 14. By rotating the spindle 22, the plate element 13, 14 can be moved back and forth in relation to the body plate 7 and thereby in relation to the rest of the trawl door.

In its simplest embodiment, the screw spindle 22 is operated manually, e.g. by applying a box wrench on the free end 23 of the spindle and turning. This will particularly be relevant if it is only wanted to adjust the plate element before launching the trawl door in the water.

Alternatively, in particular if adjustment of the plate element is desired during fishery, the free end can be driven by an electric motor which is remotely controlled in a known way from the trawler (not shown).

An alternative drive means can be a pneumatic cylinder which is controlled in a simple way by a valve system (not shown).

A second embodiment of a trawl door according to the invention is seen schematically on Figs. 5 and 6 in cross-section. Here, there are also a leading edge 11 and a trailing edge 12 of a trawl door, mainly differing from the first embodiment by having a slightly different body plate 25 and by a movable plate element 26 lying closely in contact with the body plate 25 in the first position, see Fig. 5. As opposed to the first embodiment, the movable plate element 26 is not arranged displaceable in parallel, but in its movement the element 26 follows a curve 27 corresponding to an extension of the body plate 25.

By this second embodiment there is also used a screw spindle 22 that may be operated in the previously mentioned ways. Due to the geometry, the screw spindle 22 is here passed through a hole in the body plate 25, and the projecting end 23 has the same function as described above.

For both embodiments it is noted that the movable plate elements 13, 14, 26, in addition to the shown extreme positions, can be set in any intermediate position as well as according to the actual need, either before or during fishing.

By the invention is achieved that different spreading forces can be attained depending on the actual need, without having to invest in several sizes of trawl doors or to change trawl doors.

Other embodiments of the invention are possible. Instead of large contiguous openings 21 and 27, perforated regions with many holes may be provided in the rearmost part of the body plate which are covered by displacing the plate element. Moreover, it is possible to arrange the movable plate element such that in the second position it is displaced beyond the point called the trailing edge of the trawl door. Finally, within the scope of the invention it is possible to design the body plate as a solid or a hollow airfoil profile.

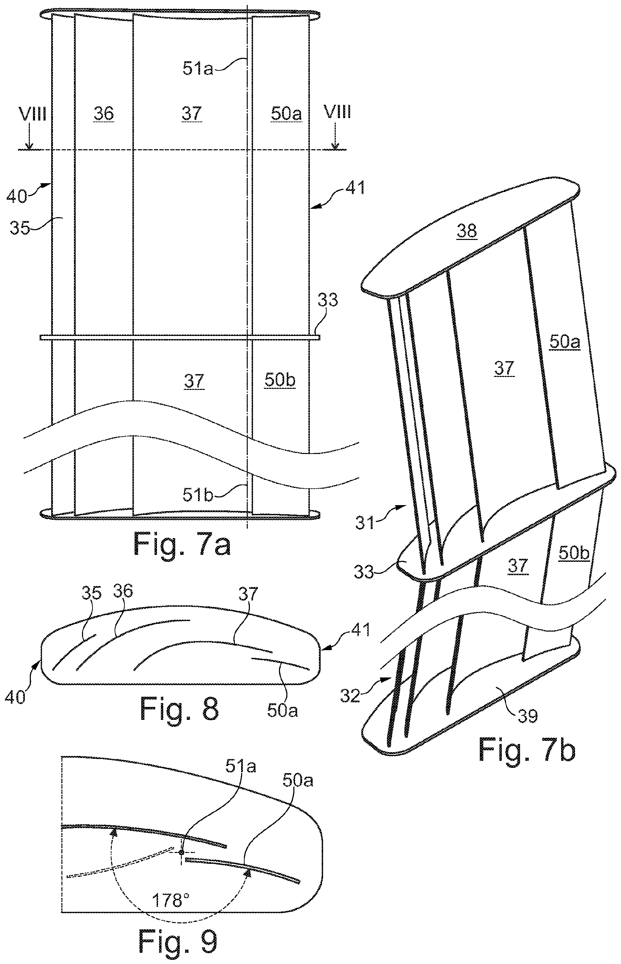

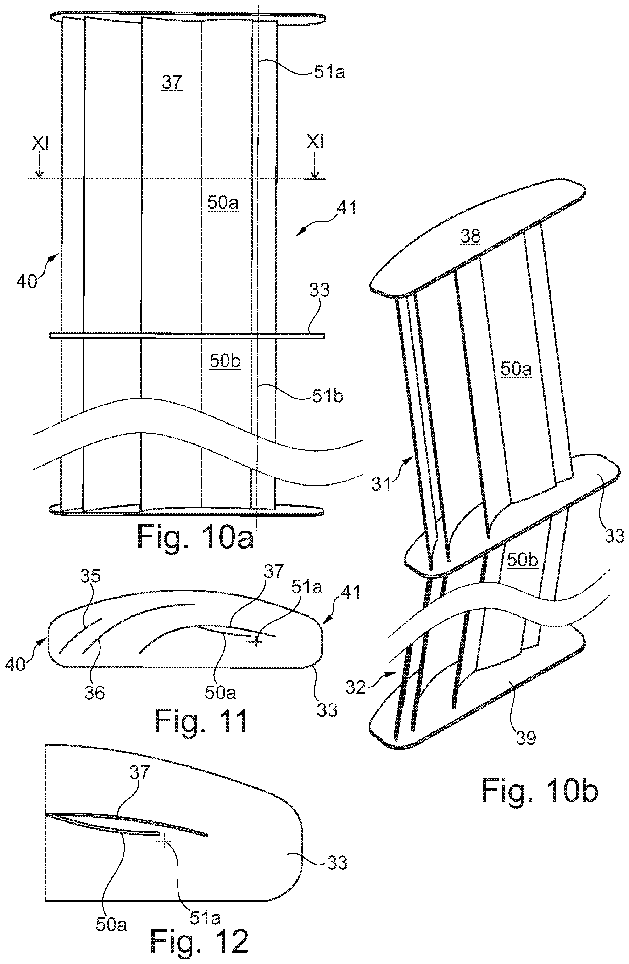

In a third and particularly simple embodiment of the invention, see Figs. 7-12, the trawl door is made with an upper part 31 and a lower part 32, which are joined by welding on a through-going intermediate plate piece 33, as the parts 31, 32 thereby form an angle in relation to each other as seen on Figs. 7b and 10b. The parts 31, 32 are provided with a top plate 38 and bottom plate 39, respectively,

The trawl door is constructed in the usual way of several cambered plates (foils) 35, 36, 37. The largest of these plate is here called the body plate 37.

The leading edge of the trawl door is designated 40 and its trailing edge 41, regarded as the leading and trailing edges during normal use of the trawl door while fishing.

Movable plate elements 50a and 50b are arranged at the trailing edge 41 of the upper part 31 and the lower part 32, respectively. These plate elements 50a, b are pivotably suspended about axes 51a, 51b that extend between the intermediate plate 33 and top plate 38 and bottom plate 39, respectively. Due to the angle between the upper part 31 and the lower part 32, the axes 51a, 51b will normally have an angle between them as well.

Means by which the plate elements 50a, b are made pivotable physically are not shown, but it will be within the options of the skilled in the art to provide a suspension for the plate element 50, e.g. by not shown axles that are arranged between the plates 33 and 38, 39, respectively, or by pivotable suspensions arranged at the plate 33, 38 and 39. Furthermore, there are provided not shown locking devices that can retain the plate elements 50a, and 50b in two different positions, an inactive first position and an active second position, respectively.

The active position is shown on Figures 7a, 7b, 8 and 9. The plate elements 50a,b are here in a position which is common on a pelagic trawl door with several foils or plate elements, as the elements 50a, b constitute an active area of the trawl door, and in this position the trawl door has maximum spreading capability during fishing.

On Fig. 9 is seen the movement which the element 50a can perform by pivoting about the axis 51a, here a pivoting through 178° about the axis 51a. The same goes for the element 50b and the axis 51b.

The inactive position is shown on Figures 10a, 10b, 11 and 12. The plate elements 50a, b are here pivoted almost 180° so that they are in contact with the inner side of the body plate 37. It is seen that the active hydrodynamic area of the trawl door, i.e. the area acted on by the water flowing past it, is reduced by the absence of the elements 50a, b at the trailing edge 41 of the trawl door. The spreading force of the door can be reduced thereby.

Since the purpose of this embodiment is to make the construction for adjusting the trawl door as simple and cheap as possible, changing between active and inactive position of the plate elements 50a, b can be done manually on-board the trawler or onshore. Besides, within the scope of the invention it is possible to change the position of only one of the plate elements 50a and 50b in order thereby e.g. to change the depth at which the trawl door and the towed trawl are to be moved.

In a not shown variant of the invention it is therefore possible also to have only one movable plate element, for example the upper element 50a.

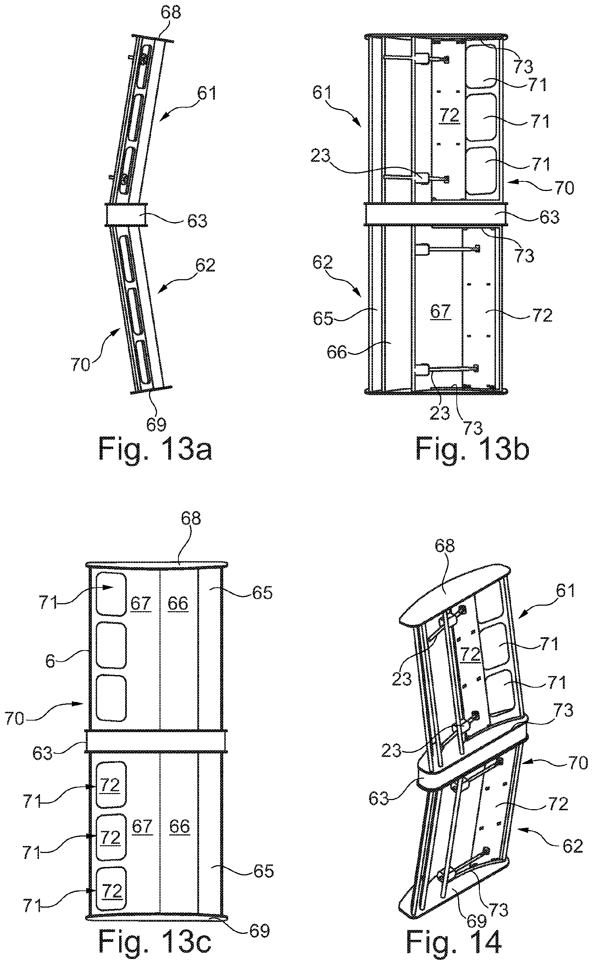

A fourth embodiment of the invention is shown on Figs. 13a - 13c and 14, where the upper part 61 and the lower part 62 are each formed of three plates 65, 66 and 67 that are joined and kept together by end plates 68 and 69 at the top and bottom of the trawl door, respectively.

Three openings 71 that may be covered by displaceable plate elements 72 are provided at the trailing edge 70 of the trawl door and of the plate 67 on the upper part 61 as well as the lower part 62. The plate elements 72 are arranged in the same way as in the second embodiment shown on Figs. 5 and 6 such that they can be displaced along the adjacent plate 67 by means of actuators or similar drive means 23. On Figs. 13b and 14 are shown grooves 73 for guiding the plate elements 72. The position of the plate elements 72 are determined by the actuators 23 which may be electrically powered, alternatively pneumatically or hydraulically powered.

On Figs. 13b and 14 are shown a position of the plate elements 72 where the openings 71 in the upper part 61 are exposed and the plate elements 72 are retracted, while the openings 71 in the lower part 62 are covered by the plate elements 72. The trawl door can thereby be controlled in vertical direction in the water.

The essential difference from the first and the second embodiments described above is an intermediate part 63 by which the parts 61 and 62 are joined. In this embodiment, the intermediate part 63 is a closed construction of plates and has a not shown cavity for accommodating auxiliary devices, drive and control means for remote control of the movable plate elements. The intermediate part 63 can therefore contain control electronics, air receivers, batteries, radio communication equipment and other means capable of controlling and driving the actuators 23 and for detecting the relative positions of the plate elements 72.

The intermediate part 63 can have different dimensions and thus be larger or smaller in relation to what appears on the drawing.

## Claims

1. A trawl door with a total height which is greater than the total length of the trawl door, where an upper part (1,31,61) of the trawl door, viewed in the situation of use, forms an angle in relation to a lower part (2, 32, 62) of the trawl door; and
- wherein the upper part (1,31,61) and the lower part (2,32,62) each have a generally cambered, longitudinal cross-section with a trailing edge (12,41,70) constituting the rearmost free edge of the trawl door during normal use;
- wherein the upper part (1,31,61) and the lower part (2,32,62) each include a fixed body plate (7) or an airfoil profile, the trailing edge (20) of the body plate (7) or profile located at the rearmost free edge of the trawl door;
wherein at least one of the upper and lower parts (1,2,31,32,61,62) is provided with a movable plate element (13,14,26,50a,50b,72) at the trailing edge (20) of the fixed body plate (7) or airfoil profile; **characterised in that** the movable plate element (13,14,26,50a,50b,72) can be moved in longitudinal direction of the trawl door such that the plate element (13,14,26,50a,50b,72) can be moved between two positions, a first position in which the plate element (13,14,26,50a,50b,72) is substantially disposed along a non-perforated region of the fixed body plate (7) or airfoil profile, and a second position in which the plate element (13,14,26,50a,50b,72) is moved a length relative to the fixed body plate (7) or airfoil profile such that the active hydrodynamic area of the trawl door is increased thereby.

2. Trawl door according to claim 1, wherein the plate element (13,14,26,50a,50b,72) can be displaced between the first position and the second position to a position where the plate element is located between the first and second positions.

3. Trawl door according to claim 2, wherein the movable plate element (13,14) is seated in guides (15), and wherein a drive means (22,23) for displacing the plate element (13,14) is arranged for displacing the plate element (13,14) relative to the fixed body plate (7) or the airfoil profile.

4. Trawl door according to claim 3, wherein the drive means (22,23) includes a screw spindle that can be operated manually.

5. Trawl door according to claim 3, wherein the drive means (22,23) includes a screw spindle which is driven by an electric motor.

6. Trawl door according to claim 3, wherein the drive means (22,23) includes a pneumatic cylinder.

7. Trawl door according to any preceding claim, wherein at least one opening (21,71) or at least one perforated region is arranged in the body plate (7) or the airfoil profile at the trailing edge (12,41,70) of the trawl door such that the plate element (13,14,26,50a,50b,72) in its second position covers the opening or the perforated region.

8. Trawl door according to any of claims 1 - 6, wherein the plate element (13,14,26,50a,50b,72) is arranged such that in the second position the plate element (13,14,26,50a,50b,72) is displaced rearwardly beyond the trailing edge (20) of the body plate (7) or the airfoil profile so that the plate element (13,14,26,50a,50b,72) forms an extension of the body plate/airfoil profile (7).

9. Trawl door according to any preceding claim, wherein the movable plate element (13,14,26,50a,50b,72) is arranged such that the plate element (13,14,26,50a,50b,72) in the first position is at least partially in contact with the body plate (7).

10. Trawl door according to any of claims 1 -8, wherein the movable plate element (13,14,26,50a,50b,72) is arranged such that the plate element (13,14,26,50a,50b,72) in the first position is spaced apart from the body plate (7).

11. Trawl door according to claim 10, wherein the movable plate element (13,14,26,50a,50b,72) is arranged such that a spacing between the plate element (13,14,26,50a,50b,72) and the body plate (7) in the second position of the plate element (13,14,26,50a,50b,72) is constant or increasing in direction towards the rearmost free edge (12,41,70) of the trawl door.

12. Trawl door according to any preceding claim, wherein is provided a movable plate element (13,14,26,50a,50b,72) in the upper and the lower part (1,2,31,32,61,62), respectively, of the trawl door.

13. Trawl door according to claim 1, wherein the movable plate element (50a,50b) is suspended pivotably about at least one axis extending substantially in the height direction of the trawl door, such that the plate element (50a,50b) can be pivoted between the two positions, a first position in which the plate element (50a,50b) is substantially disposed along the fixed body plate (7) or airfoil profile, and a second position in which the plate element (50a,50b) is pivoted away relative to the fixed body plate (7) or airfoil profile so that the plate element (50a,50b) is disposed behind the fixed body plate (7) or airfoil profile and forms at least part of the rearmost free edge (12,41,70) of the trawl door during normal use, and such that the active hydrodynamic area of the trawl door is increased thereby.

14. Trawl door according to any preceding claim, wherein the upper part (1,31,61) and the lower part (2,32,62) that form an angle in relation to each other are interconnected by an intermediate part (3,33,63) which is adapted to receive auxiliary means for controlling the movable plate element or elements (13,14,26,50a,50b,72).

## Patentansprüche

1. Scherbrett mit einer Gesamthöhe, die größer als die Gesamtlänge des Scherbretts ist, wobei ein oberer Teil (1, 31, 61) des Scherbretts, in der Verwendungssituation gesehen, einen Winkel in Bezug auf einen unteren Teil (2, 32, 62) des Scherbretts bildet; und
- wobei der obere Teil (1, 31, 61) und der untere Teil (2, 32, 62) jeweils einen im Allgemeinen gewölbten Längsschnitt mit einer Hinterkante (12, 41, 70) aufweisen, die die hinterste freie Kante des Scherbretts während der normalen Verwendung bildet;
- wobei der obere Teil (1, 31, 61) und der untere Teil (2, 32, 62) jeweils eine feststehende Körperplatte (7) oder ein Schaufelprofil beinhalten, wobei die Hinterkante (20) der Körperplatte (7) oder des Profils an der hintersten freien Kante des Scherbretts angeordnet ist;
wobei
- mindestens einer aus dem oberen und dem unteren Teil (1, 2, 31, 32, 61, 62) mit einem beweglichen Plattenelement (13, 14, 26, 50a, 50b, 72) an der Hinterkante (20) der feststehenden Körperplatte (7) oder des Schaufelprofils versehen ist;
**dadurch gekennzeichnet, dass**
das bewegliche Plattenelement (13, 14, 26, 50a, 50b, 72) in Längsrichtung des Scherbretts so bewegt werden kann, dass das Plattenelement (13, 14, 26, 50a, 50b, 72) zwischen zwei Positionen bewegt werden kann, einer ersten Position, in der das Plattenelement (13, 14, 26, 50a, 50b, 72) im Wesentlichen entlang eines nicht perforierten Bereichs der feststehenden Körperplatte (7) oder des Schaufelprofils angeordnet ist, und einer zweiten Position, in der das Plattenelement (13, 14, 26, 50a, 50b, 72) eine Strecke relativ zur feststehenden Körperplatte (7) oder zum Schaufelprofil bewegt wird, so dass der aktive hydrodynamische Bereich des Scherbretts dadurch vergrößert wird.

2. Scherbrett nach Anspruch 1, wobei das Plattenelement (13, 14, 26, 50a, 50b, 72) zwischen der ersten Position und der zweiten Position auf eine Position verschoben werden kann, in der sich das Plattenelement zwischen der ersten und der zweiten Position befindet.

3. Scherbrett nach Anspruch 2, wobei das bewegliche Plattenelement (13, 14) in Führungen (15) sitzt und wobei ein Antriebsmittel (22, 23) zum Verschieben des Plattenelements (13, 14) dazu ausgelegt ist, das Plattenelement (13, 14) relativ zur feststehenden Körperplatte (7) oder dem Schaufelprofil zu verschieben.

4. Scherbrett nach Anspruch 3, wobei das Antriebsmittel (22, 23) eine Schraubenspindel beinhaltet, die manuell betätigt werden kann.

5. Scherbrett nach Anspruch 3, wobei das Antriebsmittel (22, 23) eine Schraubenspindel beinhaltet, die von einem Elektromotor angetrieben wird.

6. Scherbrett nach Anspruch 3, wobei das Antriebsmittel (22, 23) einen Pneumatikzylinder beinhaltet.

7. Scherbrett nach einem der vorstehenden Ansprüche, wobei mindestens eine Öffnung (21, 71) oder mindestens ein perforierter Bereich in der Körperplatte (7) oder dem Schaufelprofil an der Hinterkante (12, 41, 70) des Scherbretts so angeordnet ist, dass das Plattenelement (13, 14, 26, 50a, 50b, 72) in seiner zweiten Position die Öffnung oder den perforierten Bereich abdeckt.

8. Scherbrett nach einem der Ansprüche 1-6, wobei das Plattenelement (13, 14, 26, 50a, 50b, 72) so angeordnet ist, dass das Plattenelement (13, 14, 26, 50a, 50b, 72) in der zweiten Position rückwärtig hinter der Hinterkante (20) der Körperplatte (7) oder des Schaufelprofils so angeordnet ist, dass das Plattenelement (13, 14, 26, 50a, 50b, 72) eine Verlängerung der Körperplatte/des Schaufelprofils (7) bildet.

9. Scherbrett nach einem der vorstehenden Ansprüche, wobei das bewegliche Plattenelement (13, 14, 26, 50a, 50b, 72) so angeordnet ist, dass das Plattenelement (13, 14, 26, 50a, 50b, 72) in der ersten Position zumindest teilweise die Körperplatte (7) berührt.

10. Scherbrett nach einem der Ansprüche 1-8, wobei das bewegliche Plattenelement (13, 14, 26, 50a, 50b, 72) so angeordnet ist, dass das Plattenelement (13, 14, 26, 50a, 50b, 72) in der ersten Position von der Körperplatte (7) beabstandet ist.

11. Scherbrett nach Anspruch 10, wobei das bewegliche Plattenelement (13, 14, 26, 50a, 50b, 72) so angeordnet ist, dass ein Abstand zwischen dem Plattenelement (13, 14, 26, 50a, 50b, 72) und der Körperplatte (7) in der zweiten Position des Plattenelements (13, 14, 26, 50a, 50b, 72) konstant ist oder in Richtung zur hintersten freien Kante (12, 41, 70) des Scherbretts zunimmt.

12. Scherbrett nach einem der vorstehenden Ansprüche, wobei ein bewegliches Plattenelement (13, 14, 26, 50a, 50b, 72) jeweils im oberen und im unteren Teil (1, 2, 31, 32, 61, 62) des Scherbretts vorgesehen ist.

13. Scherbrett nach Anspruch 1, wobei das bewegliche Plattenelement (50a, 50b) drehbar um mindestens eine Achse aufgehängt ist, die sich im Wesentlichen in der Höhenrichtung des Scherbretts erstreckt, so dass das Plattenelement (50a, 50b) zwischen den zwei Positionen gedreht werden kann, einer ersten Position, in der das Plattenelement (50a, 50b) im Wesentlichen entlang der feststehenden Körperplatte (7) oder dem Schaufelprofil angeordnet ist, und einer zweiten Position, in der das Plattenelement (50a, 50b) in Bezug auf die feststehende Körperplatte (7) oder das Schaufelprofil weggedreht ist, so dass das Plattenelement (50a, 50b) hinter der feststehenden Körperplatte (7) oder dem Schaufelprofil angeordnet ist und mindestens einen Teil der hintersten freien Kante (12, 41, 70) des Scherbretts während der normalen Verwendung bildet und so dass der aktive hydrodynamische Bereich des Scherbretts dadurch vergrößert wird.

14. Scherbrett nach einem der vorstehenden Ansprüche, wobei der obere Teil (1, 31, 61) und der untere Teil (2, 32, 62), die in Bezug aufeinander einen Winkel bilden, durch einen Zwischenteil (3, 33, 63) miteinander verbunden sind, der dazu ausgelegt ist, Hilfsmittel zum Steuern des beweglichen Plattenelements oder der beweglichen Plattenelemente (13, 14, 26, 50a, 50b, 72) aufzunehmen.

## Revendications

1. Porte de chalut avec une hauteur totale qui est supérieure à la longueur totale de la porte de chalut, où une partie supérieure (1, 31, 61) de la porte de chalut, observée dans la situation d'utilisation, forme un angle par rapport à une partie inférieure (2, 32, 62) de la porte de chalut ; et
- dans laquelle la partie supérieure (1, 31, 61) et la partie inférieure (2, 32, 62) ont chacune une section transversale longitudinale généralement arquée avec un bord de fuite (12, 41, 70) constituant le bord libre le plus arrière de la porte de chalut pendant une utilisation normale ;
- dans laquelle la partie supérieure (1, 31, 61) et la partie inférieure (2, 32, 62) incluent chacune une plaque de corps fixe (7) ou un profil aérodynamique, le bord de fuite (20) de la plaque de corps (7) ou du profil étant situé au niveau du bord libre le plus arrière de la porte chalut ;
dans laquelle
- au moins l'une des parties supérieure et inférieure (1, 2, 31, 32, 61, 62) est dotée d'un élément plaque mobile (13, 14, 26, 50a, 50b, 72) au niveau du bord de fuite (20) de la plaque de corps fixe (7) ou du profil aérodynamique ;
**caractérisée en ce que**
l'élément plaque mobile (13, 14, 26, 50a, 50b, 72) peut être déplacé dans une direction longitudinale de la porte de chalut de sorte que l'élément plaque (13, 14, 26, 50a, 50b, 72) peut être déplacé entre deux positions, une première position dans laquelle l'élément plaque (13, 14, 26, 50a, 50b, 72) est sensiblement disposé le long d'une région non perforée de la plaque de corps fixe (7) ou du profil aérodynamique, et une seconde position dans laquelle l'élément plaque (13, 14, 26, 50a, 50b, 72) est déplacé d'une certaine longueur par rapport à la plaque de corps fixe (7) ou au profil aérodynamique de sorte que la surface hydrodynamique active de la porte de chalut est ainsi accrue.

2. Porte de chalut selon la revendication 1, dans laquelle l'élément plaque (13, 14, 26, 50a, 50b, 72) peut être déplacé entre la première position et la seconde position jusqu'à une position où l'élément plaque est situé entre les première et seconde positions.

3. Porte de chalut selon la revendication 2, dans laquelle l'élément plaque mobile (13, 14) est logé dans des guides (15), et dans laquelle un moyen d'entraînement (22, 23) pour déplacer l'élément plaque (13, 14) est agencé pour déplacer l'élément plaque (13, 14) par rapport à la plaque de corps fixe (7) ou au profil aérodynamique.

4. Porte de chalut selon la revendication 3, dans laquelle le moyen d'entraînement (22, 23) inclut un arbre fileté qui peut être actionné manuellement.

5. Porte de chalut selon la revendication 3, dans laquelle le moyen d'entraînement (22, 23) inclut un arbre fileté qui est entraîné par un moteur électrique.

6. Porte de chalut selon la revendication 3, dans laquelle le moyen d'entraînement (22, 23) inclut un cylindre pneumatique.

7. Porte de chalut selon une quelconque revendication précédente, dans laquelle au moins une ouverture (21, 71) ou au moins une région perforée est agencée dans la plaque de corps (7) ou le profil aérodynamique au niveau du bord de fuite (12, 41, 70) de la porte de chalut de sorte que l'élément plaque (13, 14, 26, 50a, 50b, 72), dans sa seconde position, recouvre l'ouverture ou la région perforée.

8. Porte de chalut selon l'une quelconque des revendications 1 à 6, dans laquelle l'élément plaque (13, 14, 26, 50a, 50b, 72) est agencé de sorte que, dans la seconde position, l'élément plaque (13, 14, 26, 50a, 50b, 72) soit déplacé vers l'arrière, au-delà du bord de fuite (20) de la plaque de corps (7) ou du profil aérodynamique, de sorte que l'élément plaque (13, 14, 26, 50a, 50b, 72) forme une extension de la plaque de corps/du profil aérodynamique (7).

9. Porte de chalut selon une quelconque revendication précédente, dans laquelle l'élément plaque mobile (13, 14, 26, 50a, 50b, 72) est agencé de sorte que l'élément plaque (13, 14, 26, 50a, 50b, 72), dans la première position, est au moins en partie en contact avec la plaque de corps (7).

10. Porte de chalut selon l'une quelconque des revendications 1 à 8, dans laquelle l'élément plaque mobile (13, 14, 26, 50a, 50b, 72) est agencé de sorte que l'élément plaque (13, 14, 26, 50a, 50b, 72), dans la première position, est espacé de la plaque de corps (7).

11. Porte de chalut selon la revendication 10, dans laquelle l'élément plaque mobile (13, 14, 26, 50a, 50b, 72) est agencé de sorte qu'un espacement entre l'élément plaque (13, 14, 26, 50a, 50b, 72) et la plaque de corps (7) dans la seconde position de l'élément plaque (13, 14, 26, 50a, 50b, 72) est constant ou augmente dans une direction vers le bord libre le plus arrière (12, 41, 70) de la porte de chalut.

12. Porte de chalut selon une quelconque revendication précédente, dans laquelle est fourni un élément plaque mobile (13, 14, 26, 50a, 50b, 72) dans les parties supérieure et inférieure (1, 2, 31, 32, 61, 62), respectivement, de la porte de chalut.

13. Porte de chalut selon la revendication 1, dans laquelle l'élément plaque mobile (50a, 50b) est suspendu de manière pivotante autour d'au moins un axe s'étendant sensiblement dans la direction de la hauteur de la porte de chalut, de sorte que l'élément plaque (50a, 50b) peut pivoter entre les deux positions, une première position dans laquelle l'élément plaque (50a, 50b) est disposé sensiblement le long de la plaque de corps fixe (7) ou du profil aérodynamique, et une seconde position dans laquelle l'élément plaque (50a, 50b) pivote à distance par rapport à la plaque de corps fixe (7) ou au profil aérodynamique de sorte que l'élément plaque (50a, 50b) est disposé derrière la plaque de corps fixe (7) ou le profil aérodynamique et forme au moins une partie du bord libre le plus arrière (12, 41, 70) de la porte de chalut pendant une utilisation normale, et de sorte que la surface hydrodynamique active de la porte de chalut est ainsi accrue.

14. Porte de chalut selon une quelconque revendication précédente, dans laquelle la partie supérieure (1, 31, 61) et la partie inférieure (2, 32, 62) qui forment un angle l'une par rapport à l'autre sont interconnectées par une partie intermédiaire (3, 33, 63) qui est conçue pour recevoir un moyen auxiliaire pour commander l'élément ou les éléments plaques mobiles (13, 14, 26, 50a, 50b, 72).
